# EUROPÄISCHE PATENTSCHRIFT

(11) **EP 2 210 830 B1**
(45) Veröffentlichungstag und Bekanntmachung des Hinweises auf die Patenterteilung: **18.09.2013**
(21) Anmeldenummer: 10000631.1
(22) Anmeldetag: 22.01.2010
(51) Int. Cl.: B65G 15/14, B65G 15/18

(54) **Steilbandförderer**
Inclined belt conveyer
Transporteur à courroies vertical

(30) Priorität: 26.01.2009 DE 102009006135
(43) Veröffentlichungstag der Anmeldung: 28.07.2010
(73) Patentinhaber: VHV Anlagenbau GmbH, 48477 Hörstel (DE)
(72) Erfinder: Verlage, Bernhard, 48477 Riesenbeck (DE)
(74) Vertreter: Pott, Ulrich

(56) Entgegenhaltungen:
- DE-A1- 19 900 177
- DE-U1-202006 007 635
- DE-U1-202006 007 636
- JP-A- 10 226 411
- JP-U- 62 038 205

## Beschreibung

Die Erfindung betrifft einen Gurtförderer in Form eines Steilbandförderers gemäß dem Oberbegriff des Anspruchs 1.

Gurtförderer in Form von Steilbandförderern sind seit langem bekannt. Gemäß DE 19 22 636 wird eine zum Entladen von Schiffen vorgesehene Sauganlage vorgeschlagen, bei der eine als Rüssel ausgebildete Konstruktion mit innen liegendem Gerüst zwei mit einem Press-Rollen-System zusammenwirkende Fördergurte vorsieht, bei denen als randseitiger Verschluss im Fördertrum eine Wulstverbindung an den Rändern der Fördergurte genutzt wird. In JP 60/148806 wird eine Konstruktion vorgeschlagen, bei der das doppellagige Fördertrum in einer rinnen- bzw. röhrenförmigen Anlage aufgenommen ist, wobei über jeweilige deren Seitenwandungen durchgreifende Gestängeteile ein Andrücken von Andruckelementen an der Rückseite des Fördertrums erfolgt. In JP 64/43407 sind in einer vertikalen Gestängekonstruktion jeweilige mit dem Fördertrum mitführbare Pressbaugruppen vorgesehen und die Lösung gemäß JP 2/265807 sieht jeweilige Gruppen von Andruckrollen mit bis zu zehn Einzelteilen je Fördergurt vor. In JP 4/55206 sind die Fördergurte von jeweils zwei nur einen Teilbereich der Gurtbreite erfassenden Press- und Abdichtrollen hintergriffen. Diese sind auf jeweiligen Federplatten gelagert, so dass in Querrichtung zumindest vier Presspaarungen erforderlich sind, um ein stabiles System zu erreichen. In JP 10/175713 sind auf jeder Rückseite der beiden Fördergurte zwei außenseitig schwenkbar gelagerte und zur Gurtmitte hin einen senkrecht zur Förderebene wirkenden Schubmechanismus aufweisende Anpressrollen vorgesehen, um damit durch Verschwenkungen auf den Volumenstrom im Aufnahmeraum reagieren zu können. In JP 10/226411 (= JP 62-38205) ist ein zentrales Press-System vorgesehen, das zwei auf einer Seite des Fördertrums vorgesehene Anpressrollen mit einer zentralen Gegenrolle oder zwei zentralen Paaren von Gegenrollen aufweist.

Diese Rollen-Paare sind zwar elastisch gelagert, aber eine Einstellung der einzelnen Komponenten ist nicht vorgesehen. In WO 2007/131691 A1 wird ein Gurtförderer vorgeschlagen, bei dem vier paarweise an den Rückseiten der Fördergurte anlegbare und mit einem zentralen Stellorgan zusammenwirkende Pressrollen vorgesehen sind. Zusätzlich ist an den Seitenrändern der Fördergurte ein Bürstensystem als Verschluss angeordnet.

Die Erfindung befasst sich mit dem Problem, einen Gurtförderer in Form eines Steilbandförderers zu schaffen, dessen für längenvariable Förderstrecken kostengünstig herstellbare Baugruppen mit geringem technischem Aufwand für unterschiedliche Schüttgüter geeignet sind, damit ein weitgehend verlustfreier Vertikaltransport in einem anpassbaren Fördertrum möglich ist und in dessen Bereich bei hoher Bruchsicherheit sowie Verschleißfestigkeit ein einfacher Wechsel verschlissener Bauteile durchführbar ist.

Die Erfindung löst diese Aufgabe mit einem Gurtförderer mit den Merkmalen des Anspruchs 1. Weitere vorteilhafte Ausgestaltungen ergeben sich aus den Ansprüchen 2 bis 20.

Das Tragwerk umfasst dabei variabel nutzbare Rahmen-Teile, an denen für das Press-Ausgleichs-System vorgesehene Tragbaugruppen einstellbar gehalten sind, so dass im Innenraum dieses Systems die Fördergurte im Bereich des Fördertrums gezielt beeinflussbar sind und anwendungsspezifisch geführt werden können.

Die den Aufnahmeraum vorgebenden Fördergurte sind dabei an variable Füllzustände, -materialien und -bedingungen anpassbar und werden durch zentrale bzw. randseitige Stütz- und Ausgleichsbaugruppen erfasst, wobei diese mit wenigen Einzelteilen insgesamt als eine bruchsichere und vor Überbelastungen geschützte Funktionseinheit innerhalb des Tragwerkes wirksam sind. Dabei ist das baukastenartige Gesamtsystem mit kostenoptimierten Gleichbauteilen auch darauf abgestellt, für einen denkbaren Austausch von Verschleißteilen den Montageaufwand zu verringern, so dass damit die Stillstandszeiten derartiger Steilbandförderer kostengünstig gesenkt werden.

Ausgehend von dieser das Tragwerk bildenden Gleichbauteil-Konstruktion mit baukastenartig stapelbaren Einzelteilen wird in den das Fördertrum aufnehmenden Innenraum ein Press-Feder-System integriert, das nur drei Paarungen von jeweiligen Andruck- und Schließrollen zur Erfassung des Fördertrums aufweist. Bei dieser mit Blick auf geringe Bauteilzahl konzipierten Rollen-Führung kann bei vergleichsweise geringem Aufwand ein sich an Volumen-, Konsistenz- und Größenveränderungen des Schüttgutes optimal anpassender und zuverlässig randdichter Aufnahmeraum definiert werden. Dieses Grundkonzept ist weitgehend beliebig auch auf andere Tragwerkausführungen erweiterbar, so dass Steilbandanlagen mit ähnlichen Transport- und Förderaufgaben optimal planbar sind.

Zur einstellbaren Halterung der funktionsrelevanten Baugruppen ist im Tragwerk ein Kassettenchassis mit spiegelsymmetrisch angeordneten Paaren von Vertikalträgern vorgesehen, an denen die Press-Ausgleichs-Systeme mit den jeweiligen Andruck- und Schließrollen variable Einbaulagen einnehmen können und so das Fördertrum jeweils optimal erfasst und verschlossen wird. Dabei wird mittels einfacher, die Rollenanlage direkt beeinflussender Federelemente eine - an das zu transportierende Schüttgut angepasste - Vorspannung an den Rückseiten der beiden Fördergurte erzeugt. Diese an den Rollen erforderlichen Druck- bzw. Presskräfte können durch jeweilige mit den Federelementen zusammenwirkende Stellorgane verändert werden, so dass durch variable Federhärte im System eine schnelle Anpassung an kundenspezifisch variierende Einsatzbedingungen des Systems möglich ist.

Ausgehend von dieser die Rollensysteme aufnehmenden Tragwerk-Konstruktion wird diese zusätzlich im Bereich des Innenraums bzw. der seitlichen Kassettenchassis mit einer jeweiligen Schachtbaugruppe komplettiert, die sich vertikal in Richtung des Fördertrums erstreckt und dabei die gepressten Seitenränder der Fördergurte nach außen hin abdeckt. In diesem Bereich des in Rahmenbauweise geschlossenen Tragwerkes kann in diesen Schachtbaugruppen jeweiliges über die seitlichen Seitenränder der Fördergurte austretendes Schüttgut gezielt erfasst und insbesondere in den Bereich einer bodenseitigen Schüttgutaufnahme zurückgeführt werden. Damit bildet der erfindungsgemäße Gurtförderer mit dem Tragwerk und der Schachteinheit ein weitgehend geschlossenes Dichtsystem, mit dem auch mit Blick auf den Umweltschutz ein staub- und damit verlustfreier Transport von weitgehend beliebigen Schüttgütern möglich wird.

Weitere Einzelheiten und vorteilhafte Ausgestaltungen ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine perspektivische Ausschnittsdarstellung des erfindungsgemäßen Gurtförderers mit einem Tragwerk,
- Fig. 2: eine Draufsicht des Gurtförderers gemäß Fig. 1,
- Fig. 3: eine Draufsicht des Gurtförderers ähnlich Fig. 2 ohne Schüttgut zwischen zwei Fördergurten,
- Fig. 4: eine Seitenansicht des Gurtförderers gemäß Fig. 1,
- Fig. 5: eine Perspektivdarstellung des Tragwerkes gemäß Fig. 4 ohne Förderbaugruppen,
- Fig. 6: eine vergrößerte Ausschnittsdarstellung des Tragwerkes im Bereich seitlicher Schließrollen in einfacher Ausführung am Fördertrum,
- Fig. 7: eine perspektivische Einzeldarstellung einer der einfachen Schließrollen gemäß Fig. 6 in Anlagestellung am Tragwerk,
- Fig. 8: eine vergrößerte Perspektivdarstellung auf im Bereich des Fördertrums gegenüberliegende Schließrollen mit Bruchsicherung,
- Fig. 9: eine vergrößerte Ausschnittsdarstellung der am Tragwerk gelagerten Schließrollen ähnlich Fig. 8 mit Bruchsicherung,
- Fig. 10 und Fig. 11: jeweilige die Schließrollen verdeutlichende Prinzipdarstellungen mit federnder Abstützung,
- Fig. 12: eine vergrößerte Ausschnittsdarstellung einer der zentral am Fördertrum wirksamen Andruckeinheiten in Draufsicht,
- Fig. 13: eine Seitenansicht der Andruckeinheit gemäß Fig. 12,
- Fig. 14: eine Perspektivdarstellung der Andruckeinheit gemäß Fig. 13,
- Fig. 15: eine Perspektivdarstellung ähnlich Fig. 14 mit der Andruckeinheit im Bereich des in der Förderphase befindlichen Fördertrums,
- Fig. 16: eine vergrößerte Ausschnittsdarstellung eines zur Einstellung der Andruckeinheit gemäß Fig. 15 vorgesehenen Stellorgans,
- Fig. 17: eine Perspektivdarstellung des Gurtförderers nahe einem unteren Aufgabebereich der Fördergurte,
- Fig. 18: eine Perspektivdarstellung des Tragwerkes mit seitlich verschlossener Aufnahmezone,
- Fig. 19: eine Ausschnittsdarstellung der beiden im Bereich der Kassettenchassis gehaltenen Schließeinheiten mit Aufnahmezone,
- Fig. 20: eine Ausschnittsdarstellung des Gurtförderers im Bereich einer jeweilige Trums der Förderbänder erfassenden Vorspurstation, und
- Fig. 21: eine perspektivische Rückansicht der Vorspurstation gemäß Fig. 20.

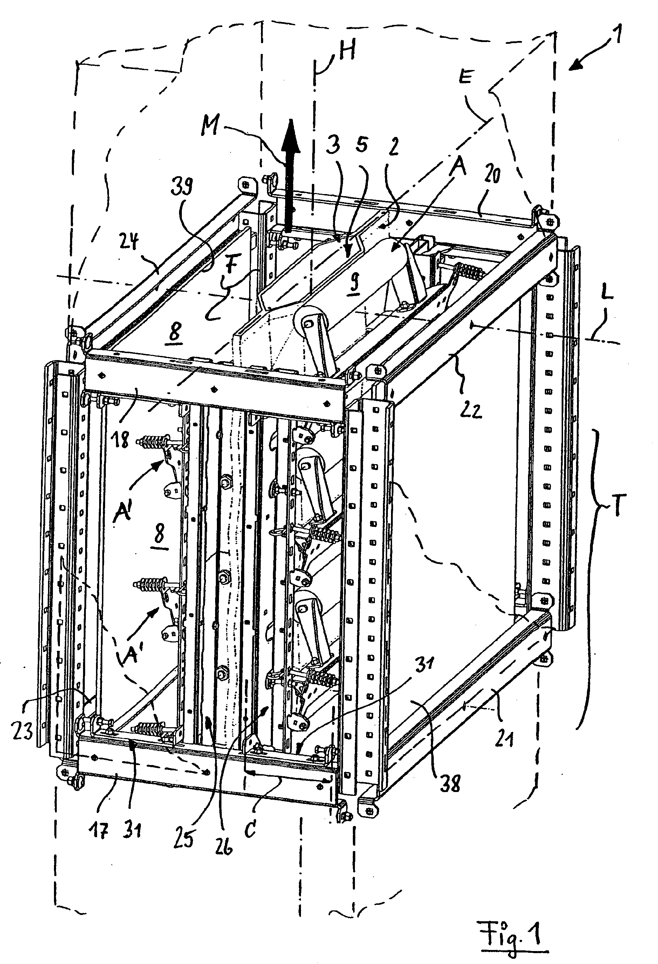

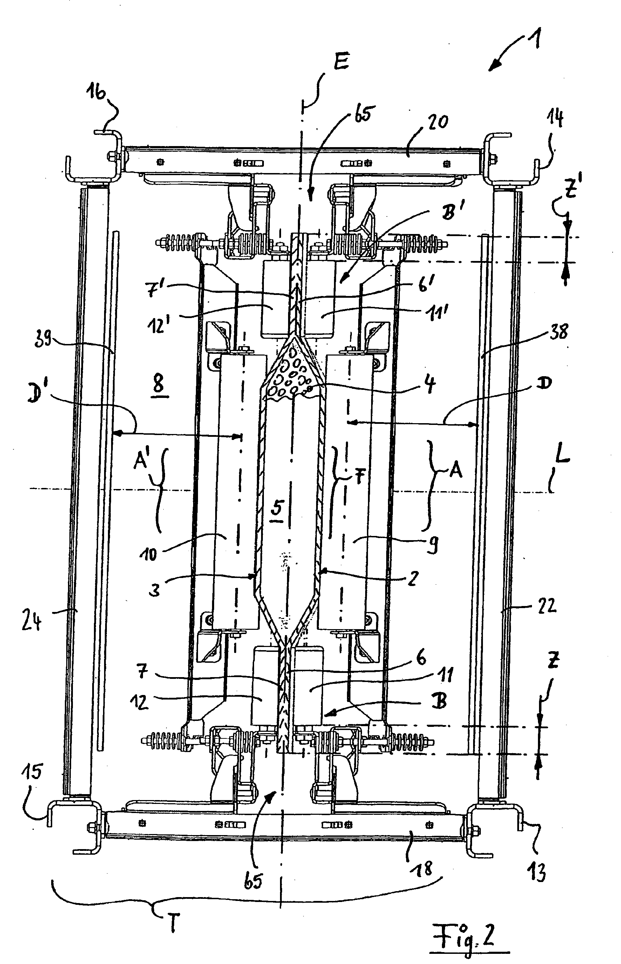

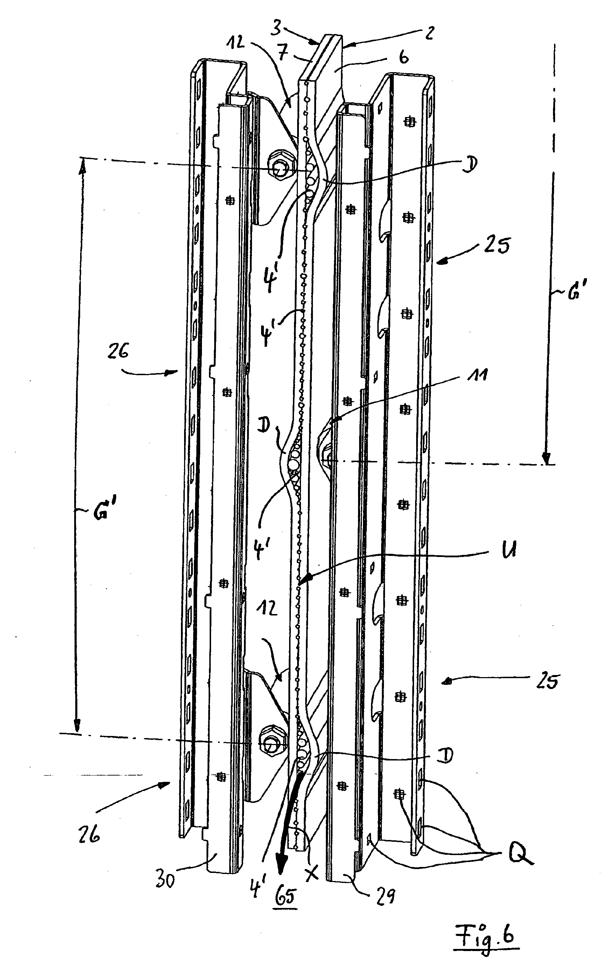

In Fig. 1 ist ausschnittsweise ein insgesamt mit 1 bezeichneter und eine vertikale Hochachse H definierender Gurtförderer in Form eines Steilbandförderers dargestellt. Bei derartigen Anlagen sind zwei zumindest phasenweise in einem Fördertrum F parallel zu einer Förderebene E verlaufende Fördergurte 2, 3 vorgesehen. Zwischen diesen Fördergurten 2, 3 wird während der dargestellten Förderphase zur vertikalen Mitnahme von vorzugsweise losem Schüttgut 4 (Fig. 2, Fig. 6) ein Aufnahmeraum 5 gebildet, wobei in diesem zentralen Bereich des Fördertrums F an dessen jeweiligen Rück- bzw. Außenseiten anlegbare Andruckeinheiten A, A' vorgesehen sind. Gleichzeitig wirken die Fördergurte 2, 3 mit Schließelementen B, B' zusammen, mit denen die Randbereiche 6, 7 bzw. 6', 7' der Fördergurte 2, 3 aneinanderpressbar sind.

Gurtförderer dieser Art werden insbesondere für Transportsysteme eingesetzt, in denen auch Schüttgüter in Form von Ton, Kies o. dgl. einen hohen Feinkornanteil aufweisenden Rohstoffen zu fördern sind. Bekannt sind auch industrielle Anlagen in Modulbauweise, bei denen jeweilige Fördergurte 2, 3 mit einem Breiten-Maß von beispielsweise 500 mm bis 1600 mm einsetzbar sind und so ein großes Fördervolumen realisiert werden kann.

Der erfindungsgemäße Gurtförderer 1 basiert auf einem kundenspezifisch optimierbaren Konzept, bei dem in modularer Bauweise aufgebaute und in einer Reihen- oder Stapelstellung baukastenartig verbindbare Tragwerke T als Basisgestellte verwendet werden. Die Zusammenschau von Fig. 1 und 2 verdeutlicht diese eine optimierte Bauteilkombination ermöglichende Struktur des Gurtförderers 1 mit einem der Tragwerke T, wobei in dessen quaderförmigen Innenraum 8 das Fördertrum F zentral mittels gegenüberliegender Andruckrollen 9, 10 der zwei Andruckeinheiten A, A' geführt wird und gleichzeitig mittels randseitig an den Fördergurten 2, 3 anliegender Schließrollen 11, 12 der beiden Schließeinheiten B, B' eine Abdichtung des Systems erfolgt.

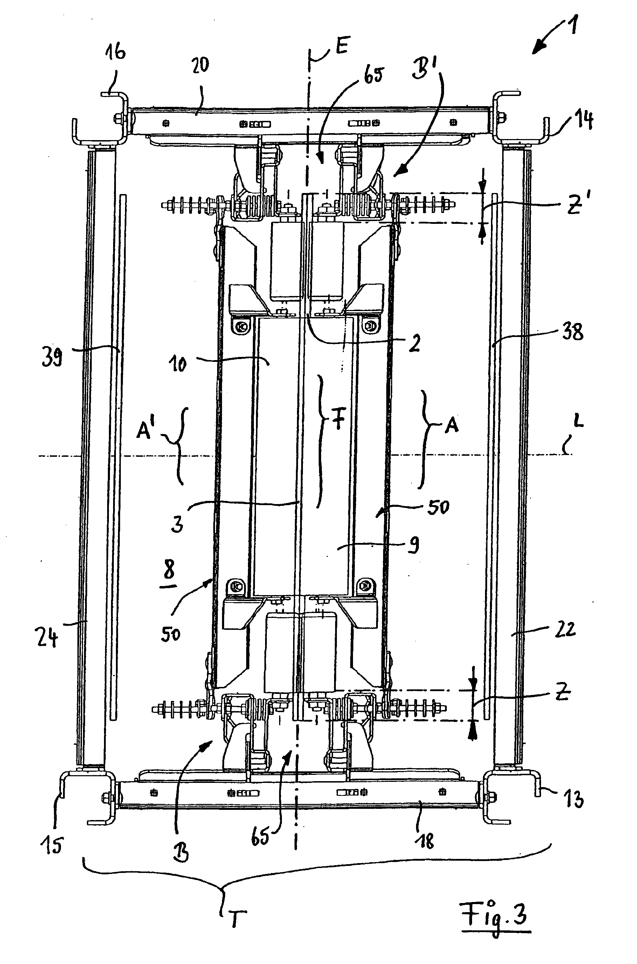

Die Zusammenschau von Fig. 2 (gefüllter Aufnahmeraum 5) und Fig. 3 (parallele Anlage der Fördergurte 2 und 3) macht deutlich, dass mit den Rollen 9, 10 und 11, 12 sowie 11', 12' nur jeweils drei Press-Paarungen so wirksam sind, dass der technische Aufwand bei diesem System vergleichsweise gering ist. Diese Press-Baugruppen sind am Tragwerk T mittels jeweiliger - nachfolgend näher beschriebener - Stützverbindungen so gehalten, dass optimale Einstellungen schnell möglich sind. Dabei sind die Stützbauteile so ausgeführt, dass drei Bereiche mit voneinander entkoppelten Press-Ausgleichs-Systeme im Fördertrum F definiert werden und das damit realisierte Konzept bei Gewährleistung einer hohen Bruchsicherheit einen besonders langzeitstabilen Einsatz des Gurtförderers ermöglicht.

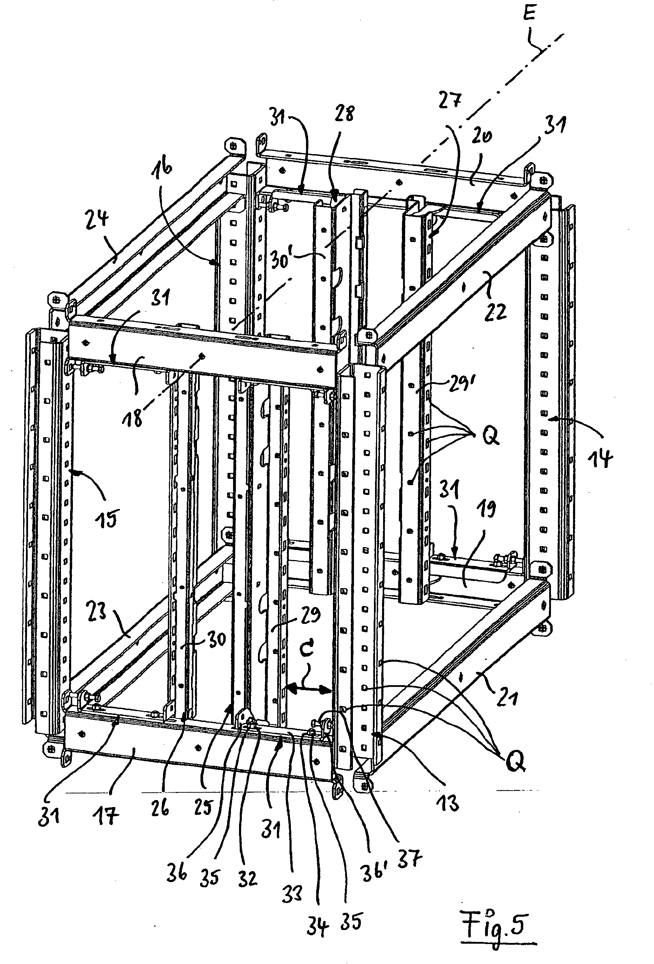

Aus der Detaildarstellung des Tragwerkes T gemäß Fig. 5 wird deutlich, dass dieses als ein im wesentlichen geschlossener Gehäuserahmen mit vier Eckpfosten 13, 14 sowie 15, 16 ausgebildet ist. Diesen sind paarweise übereinander jeweils Längsbalken 17, 18 sowie 19, 20 und parallel zum innen liegenden Fördertrum F verlaufende Querbalken 21, 22 sowie 23, 24 zugeordnet. Die in ihrer jeweiligen Lage zum Fördertrum F einstellbaren Andruck- und Schließeinheiten A, A' und B, B' sind in diesem Gehäuserahmen in weitgehend variablen Einbaulagen positionierbar, wozu an den Bauteilen ein entsprechendes Raster von aufeinander abgestimmten Verbindungsöffnungen Q (Fig. 5) vorgesehen ist.

Als funktionale Träger sind im Bereich der beiden gegenüberliegenden Paare von Längsbalken 17, 18 bzw. 19, 20 jeweils zwei Kassettenchassis 25, 26 bzw. 27, 28 in Form von spiegelsymmetrisch zur Förderebene E angeordneten Vertikalträgern 29, 30 bzw. 29', 30' vorgesehen. Dabei ist in diesem Bereich eine erste optimierbare Lageeinstellung der Baugruppen A, A', B, B' dadurch möglich, dass an den Längsbalken 17, 18, 19, 20 jeweilige die Enden der Vertikalträger 29, 29', 30, 30' erfassende Einstellschlitten 31 so angeordnet sind, dass sämtliche der vier Kassettenchassis 25 bis 28 durch zumindest jeweils zwei der Einstellschlitten 31 verschiebbar bzw. ausrichtbar sind.

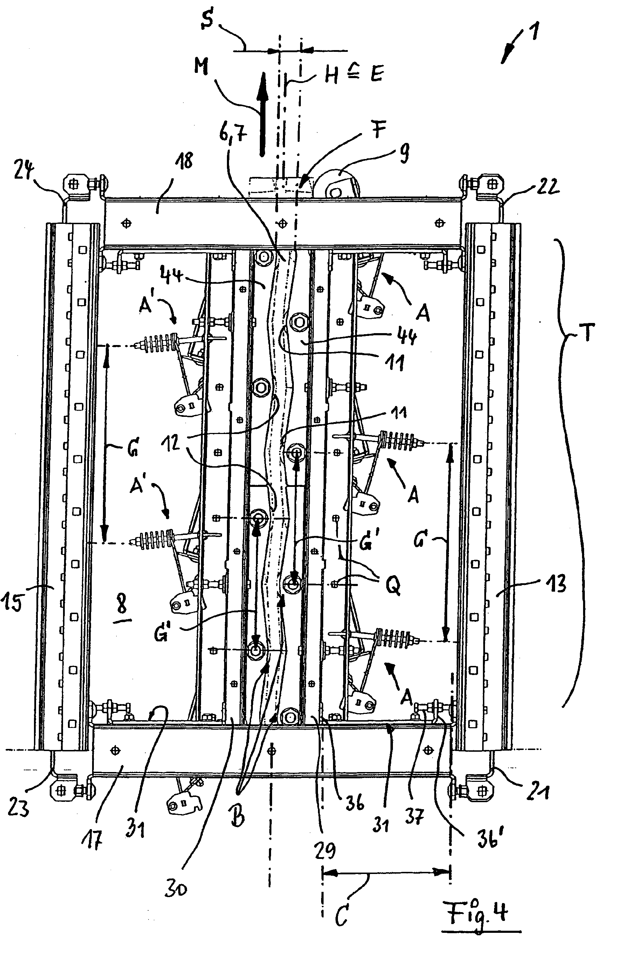

In Fig. 5 ist einer der Einstellschlitten 31 beispielhaft näher bezeichnet, wobei der in Längsrichtung U-förmig profilierte Einstellschlitten 31 mit einem Basisschenkel 33 versehen ist, der im Bereich von Längsschlitzen 32 bzw. 34 am Längsbalken 17 mit jeweiligen Schrauben 35 gehalten ist. Ein vertikaler Schenkel 36 liegt dabei am jeweiligen Kassettenchassis 25 an und ein zweiter vertikaler Schenkel 36' erfasst eine Einstellschraube 37 (Fig. 4), so dass eine Abstandslage des Vertikalträgers 29 zur Ebene E bzw. zum Eckpfosten 13 korrigiert werden kann (Pfeilrichtung C). Es versteht sich, dass durch den symmetrischen Aufbau des Tragwerkes T - sowohl bezüglich der quer gerichteten Förderebene E als auch der längs gerichteten Ebene L - in sämtlichen Teilbereichen der Kassettenchassis 25 bis 28 die vorbeschriebene Einstellmöglichkeit mittels des jeweiligen Einstellschlittens 31 besteht. Damit können sowohl die an den Kassettenchassis befindlichen Baugruppen A, A', B, B' positioniert als auch Einstellungen des Maßes eines vertikalen Spaltes S - in den die Randbereiche 6, 7 des Fördertrums F in den Bereich der Kassettenchassis eingreifen - vorgenommen werden (Fig. 4, Fig. 8, Fig. 10).

Die in Fig. 1 und 2 gezeigte Funktionslage des Tragwerkes T verdeutlicht auch, dass in dessen Innenraum 8 beidseits des Fördertrums F mit einem entsprechenden Abstand D, D' zur zentralen Andruckeinheit A, A' ein jeweiliges entsprechend dem Konzept der Förderanlage vor- bzw. rücklaufendes Trum 38 bzw. 39 (Lasttrum oder Leertrum) von Fördergurten angeordnet werden kann, so dass das Tragwerk T zu diesen seitlichen Bereichen wandartig "verschlossen" ist. Diese beiden Trums 38 und 39 sind dabei im Nahbereich der paarweise übereinander angeordneten Querbalken 21, 22 bzw. 23, 24 angeordnet, so dass eine weitgehend geringe Beeinflussung des Innenraums 8 erfolgt und für die Press-Ausgleichs-Systeme am Fördertrum F ein hinreichender Einbau- und Bewegungsraum belassen ist.

Mit Blick auf Fig. 4 zeigt diese Seitenansicht der am Tragwerk T montierten Baugruppen eine optimale Ausführungsvariante, bei der in einer funktionalen Übereinanderanordnung jeweils mehrere der Andruck- und Schließeinheiten A, A' bzw. B (B' nicht sichtbar) in jeweiligen vertikalen Abständen G bzw. G' so vorgesehen sind, dass eine funktionale Einheit von in das Tragwerk T integrierten Press-Ausgleichs-Systemen wirksam wird. Mit den jeweiligen Abständen G, G' kann dabei die vertikale "Dichte" dieser Funktionsteile variabel gewählt werden, so dass durch eine gestufte Festlegung in den entsprechend vorbereiteten Verbindungsöffnungen Q (Fig. 4) eine weitere Optimierungsmöglichkeit des Systems deutlich wird. Mit Abständen G sind die jeweiligen vertikalen Abstände der Andruckeinheiten A, A' gezeigt, wobei diese bezüglich der vertikalen Förderebene E (entspricht der zentralen Hochachse H des Tragwerkes T) an der jeweiligen Seite des Fördertrums F versetzt zueinander angeordnet sind. Dieser die Bruch- und Zugbelastungen der Förderbänder 2, 3 minimierenden regelmäßigen Anordnung folgend, weisen auch die auf gegenüberliegenden Seiten der Längsmittelebene L am Fördertrum F angreifenden Schließeinheiten B, B' in ihren Abständen G' jeweils einen vertikalen Versatz auf, so dass die Randbereiche 6, 7 bzw. 6', 7' in vertikaler Richtung des Spaltes S mit wellenlinienförmiger Spann-Kontur verlaufen (Fig. 4, mittig).

Das modulare Konzept des Gurtförderers 1 sieht vor, dass die Andruckeinheiten A, A' bzw. die Schließeinheiten B, B' im Stützbereich zum Tragwerk T eine verbesserte Bruchsicherung gegen Unregelmäßigkeiten im Fördergurt bereits dadurch aufweisen können, dass die elastischen Eigenschaften des Materials der Fördergurte 2, 3 genutzt werden und/oder diese optimal für die jeweilige Förderaufgabe ausgewählt und an das vorbeschriebene Press-Ausgleichssystem angepasst werden. In Fig. 6 ist in einer vergrößerten Ausschnittsdarstellung der Bereich der Kassettenchassis 25, 26 dargestellt, wobei die jeweiligen Schließrollen 11, 12 in Förderrichtung des Systems (Pfeil M) mit einem Abstand G' (Fig. 4) versetzt angeordnet sind. Bei über das "normale" Transportvolumen hinaus gehenden Volumenänderungen im Aufnahmeraum 5 bzw. ungewollten Materialverlagerungen in den Randbereichen 6, 7 (Fig. 6, jeweiliger Rollenbereich) wird ein bruchsicherer Belastungsausgleich bereits dadurch erreicht, dass nur durch eine federelastische Dehnung (Bereich D, Fig. 6) der Fördergurte 2, 3 die Transport- und Dichtfunktion des Systems weitgehend ungestört bleibt. Die Förderphase gemäß Fig. 6 verdeutlicht, dass das Material 4' seitlich (in der Zeichnungsebene, Pfeil X) ausgefördert werden kann oder in Förderrichtung M zum Auswurfbereich mitgenommen wird.

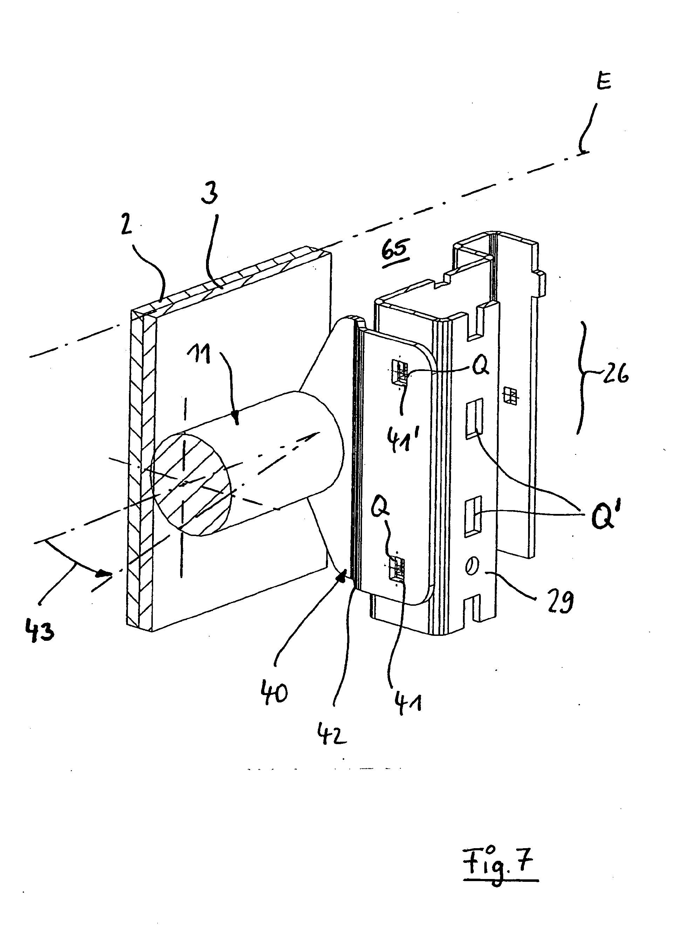

In Fig. 7 zeigt eine vergrößerte Einzeldarstellung die konstruktiv einfache "elastische" Halterung einer der Schließrollen 11 gemäß Fig. 6, wobei diese mittels einer profilierten Halteplatte 40 erfasst ist. Diese Halteplatte 40 wird am Vertikalträger 29 in variablen Einbaulagen durch entsprechende, mit den Verbindungsöffnungen Q korrespondierende Halteöffnungen 41, 41' durchgreifende Schrauben (nicht dargestellt) fixierbar ist. Mittels eines bogenförmigen Profilbereiches 42 ist dieser Stütz- und Ausgleichsbereich so ausgebildet, dass in einer Pfeilrichtung 43 auftretende Belastungen, beispielsweise durch größere Materialteile 4' (Fig. 6), mit entsprechendem Federweg besser ausgleichbar sind.

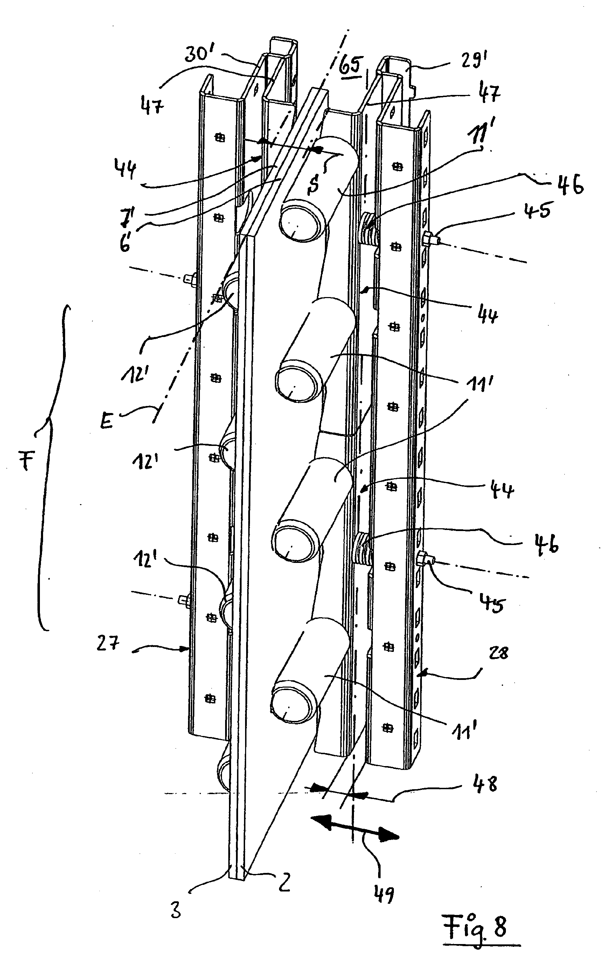

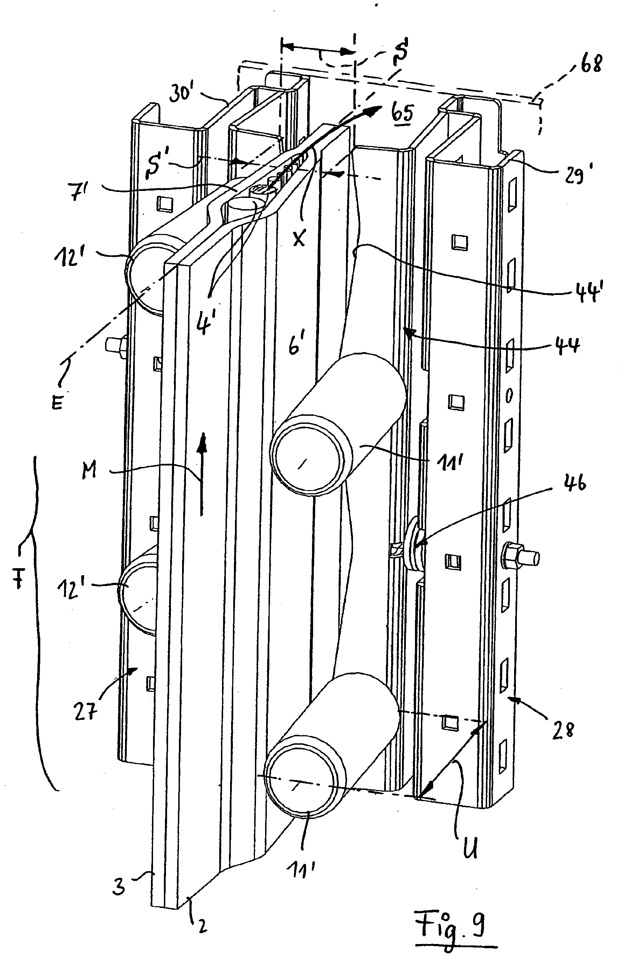

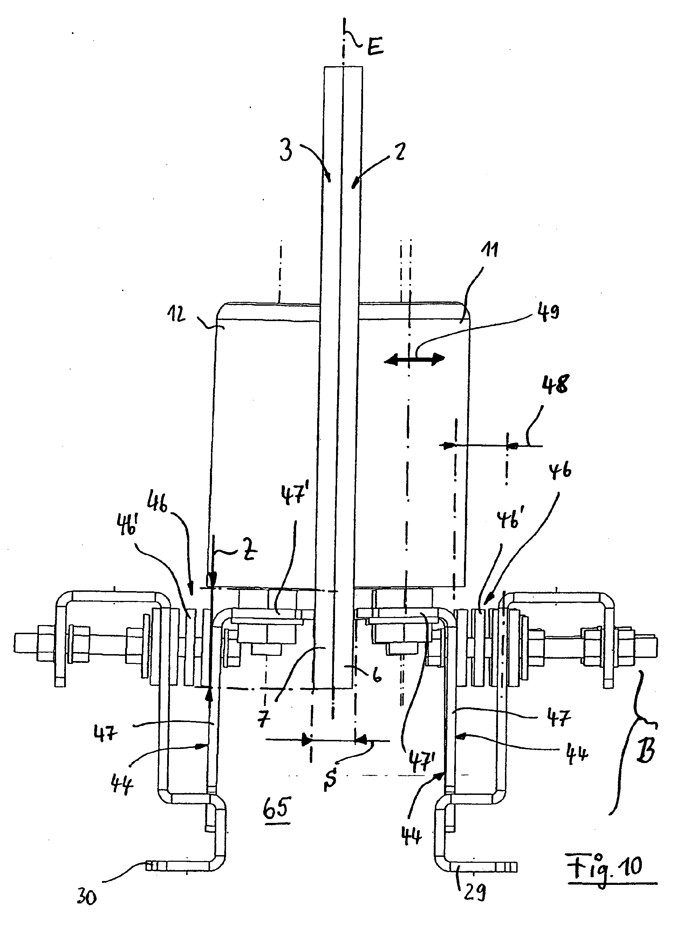

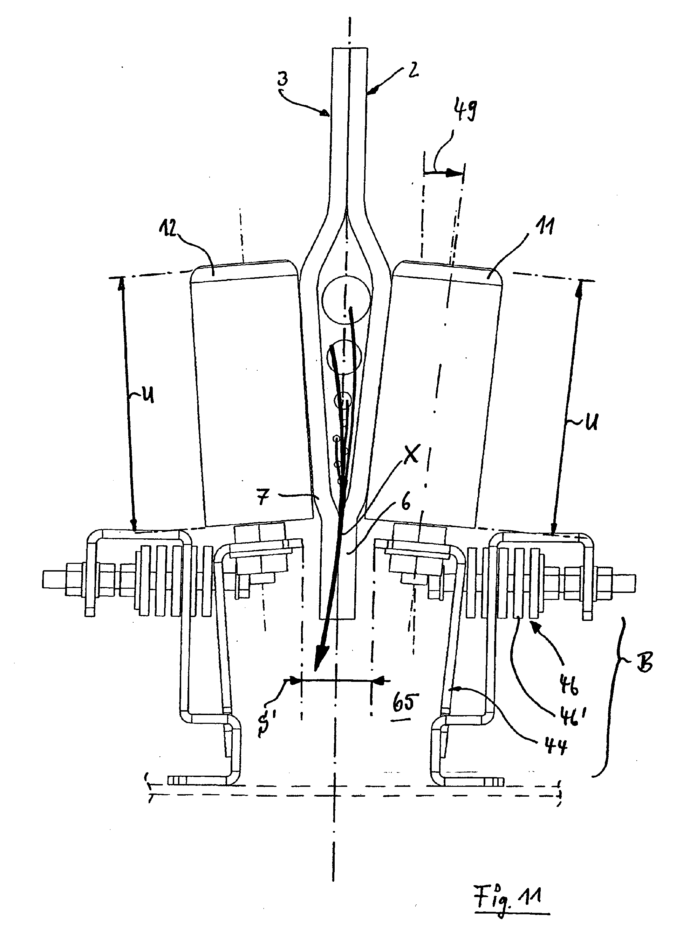

In Fig. 8 bis Fig. 11 ist eine Erweiterung des vorbeschriebenen einfachen Bruchsicherungssystems dargestellt, wobei hier die Schließrollen 11, 12 mittels federnd gelagerter Teile (Federelement 46) im Bereich der Stützverbindungen zu den Kassettenchassis 27, 28 hin abgestützt sind. Auch dieses Federsystem ist unabhängig von den Andruckrollen 9, 10 bzw. den beiden Andruckeinheiten A, A' (Fig. 2) wirksam, so dass voneinander entkoppelte Systeme eine jeweilige Bruchsicherungs-Funktion übernehmen. Die Schließrollen 11', 12' sind bei der Ausführung gemäß Fig. 8 an L-förmigen Tragplatten 44 gehalten, die ihrerseits über jeweilige Halteschrauben 45 und die zwischengeordneten Federelemente 46 mit dem jeweiligen Vertikalträger 29, 30 bzw. 29', 30' verbunden sind (Fig. 10). An einem entsprechenden Halteschenkel 47 der Tragplatte 44 liegt das als Druckfeder 46' ausgebildete Federelement 46 so an, dass in einem Spaltbereich 48 entsprechende Bewegungen in einer Pfeilrichtung 49 möglich sind und damit die von den Schließrollen 11, 12 bzw. 11', 12' aufgenommenen Verlagerungen (Fig. 9, Fig. 11) ausgeglichen werden können. Dabei wird bei in die Randbereiche 6, 7 bzw. 6', 7' eintretendem Material 4' auch ein vergrößerter Spalt S' (Fig. 11) erreicht und die Funktion des Systems bleibt bruchsicher gewährleistet.

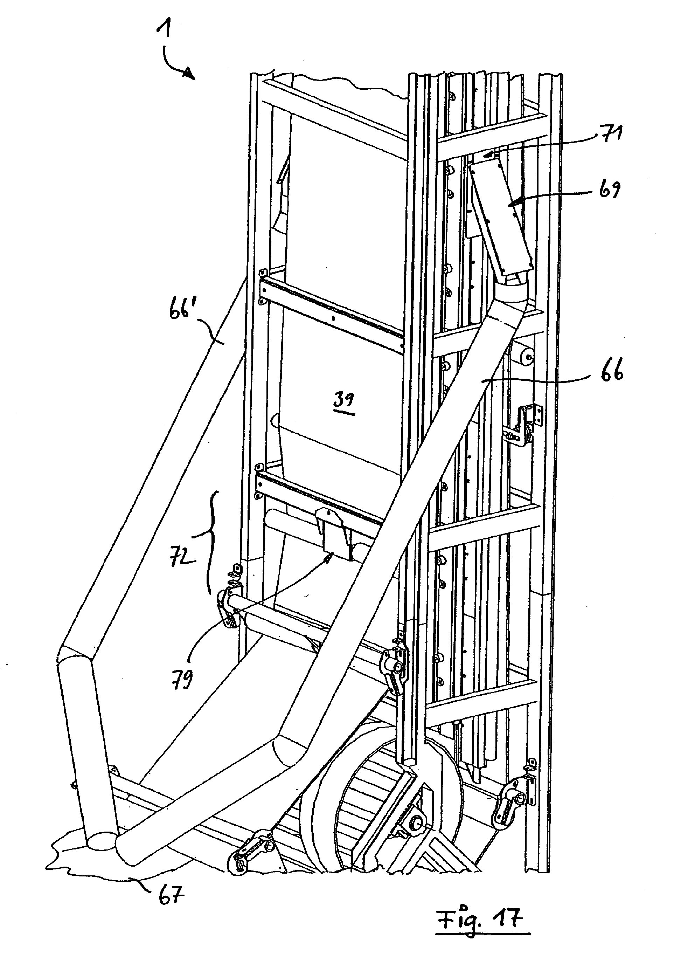

In Fig. 9 ist eine entsprechende Situation dargestellt, bei der Schüttgut 4' in den Randbereich 6, 7 der beiden Fördergurte 2, 3 eingetreten ist. Die dabei auftretende Verlagerung der federn gelagerten Bauteile dieser Schließeinheit B' ergibt sich aus der Zusammenschau von Fig. 10 und Fig. 11, wobei insbesondere durch die vertikale Abstandslage G' der gegenüberliegenden Schließrollen 11, 12 bzw. 11', 12' in jeweiligen vertikalen Zwischenbereichen U (Fig. 6) eine Ausleitung des Materials 4' zu den Kassettenchassis 25, 26 bzw. 27, 28 hin möglich ist (Pfeil X, Fig. 9, Fig. 11) und dabei eine zwischen diesen gebildete Aufnahmezone 65 wirksam wird (s. a. Fig. 17 bis Fig. 19). Das elastische bzw. federnde Verhalten des Systems ermöglicht dabei auch die Mitnahme in Pfeilrichtung M, so dass die Teile des "eingeklemmten" Schüttgutes 4' im Auswurfbereich des Fördertrums gleichzeitig mit dem zentralen Schüttgut 4 ausgefördert werden.

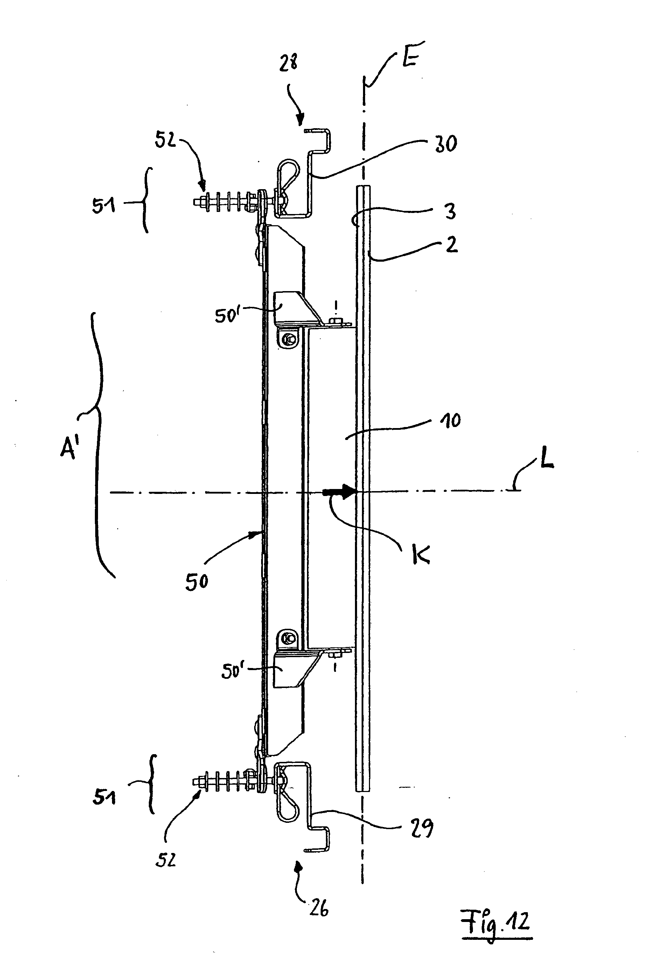

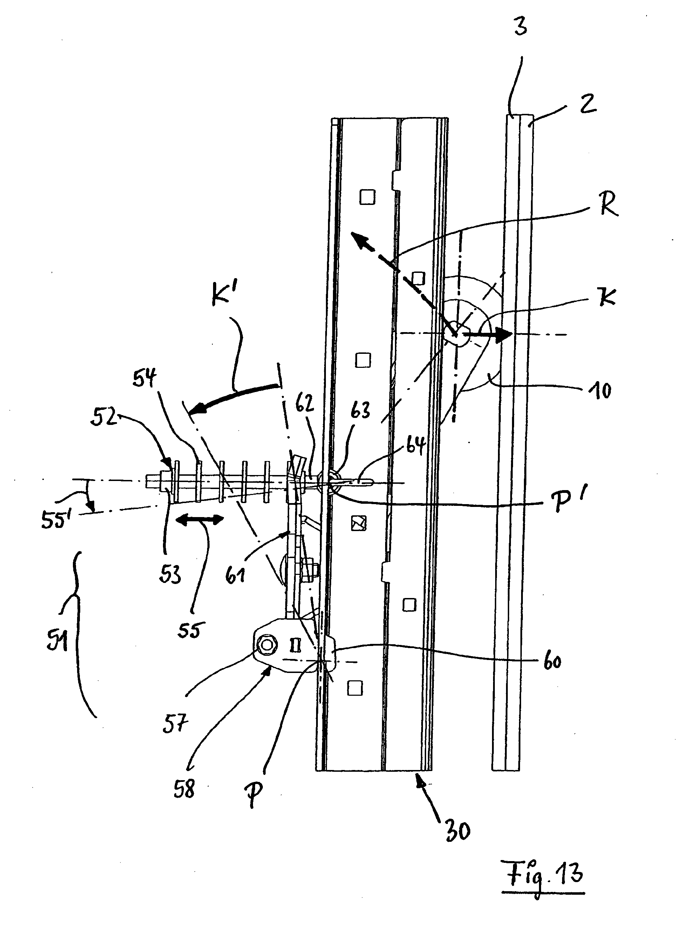

Ausgehend von den Darstellungen gemäß Fig. 1 bis 4 wird in vergrößerten Einzeldarstellungen gemäß Fig. 12 bis 16 die Ausbildung einer der zentralen und spiegelbildlich zur Förderebene E angeordneten Andruckeinheiten A, A' näher dargestellt. Diese Einheit A' weist einen sich im wesentlichen horizontal zwischen den zur Längsachse L gegenüberliegenden Vertikalträgern 29, 30 der Kassettenchassis 25, 27 bzw. 26, 28 erstreckenden Querträger 50 auf. Mit diesem Basisteil ist die jeweilige Andruckrolle 9, 10 so verbunden, dass diese Ausgleichs- und Pressbauteile nach Art einer Pendelstütze zusammenwirken. Der Querträger 50 ist dazu im Bereich der zur Längsmittelebene L gegenüberliegenden Vertikalträger 29, 30 mittels eines allgemein mit 51 bezeichneten Stellorgans gehalten, wobei in dessen Bereich mittels eines Stellgliedes 52 eine Verbindung geschaffen ist, mit der variabel vorgebbare Druckparameter (Pfeil K, Fig. 13) im Bereich der jeweiligen Andruckrollen 9, 10 erzeugbar sind. Die Zusammenschau des prinzipiellen Aufbaus dieser Pendelstützen-Halterung gemäß Fig. 12 mit der Einbausituation gemäß Fig. 4 macht deutlich, dass sämtliche im Fördertrum F angeordnete Andruckeinheiten A, A' im Bereich gegenüberliegender Vertikalträger der Kassettenchassis 25, 26 bzw. 27, 28 in entsprechend variablen Einbaulagen aufnehmbar sind und dabei diese Pendelstützen jeweils zumindest ein auf die Andruckrolle 9 bzw. 10 einwirkendes Stellorgan 51 aufweisen.

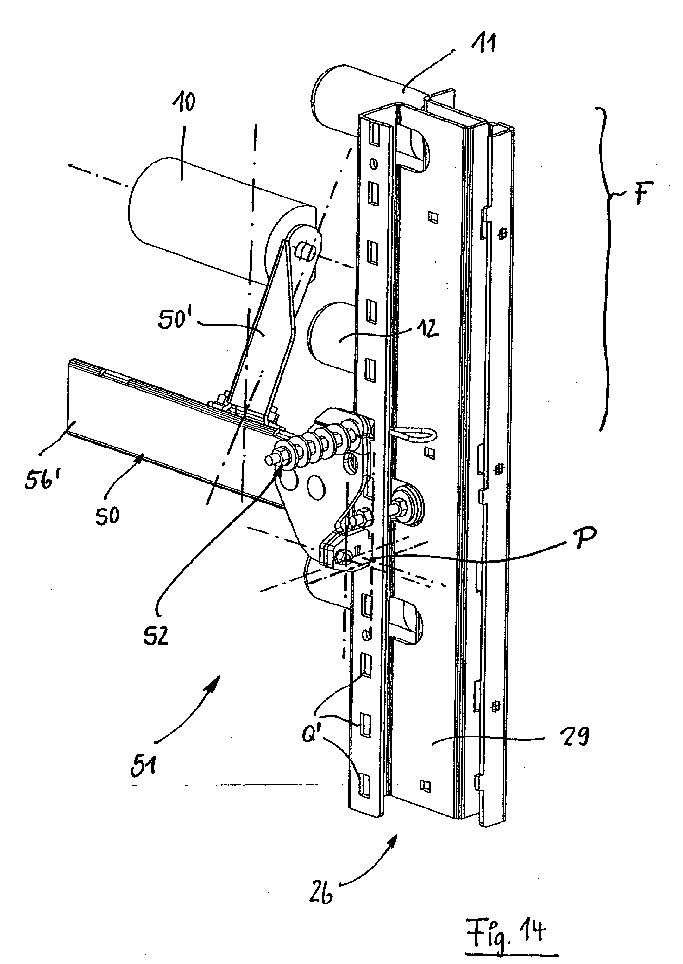

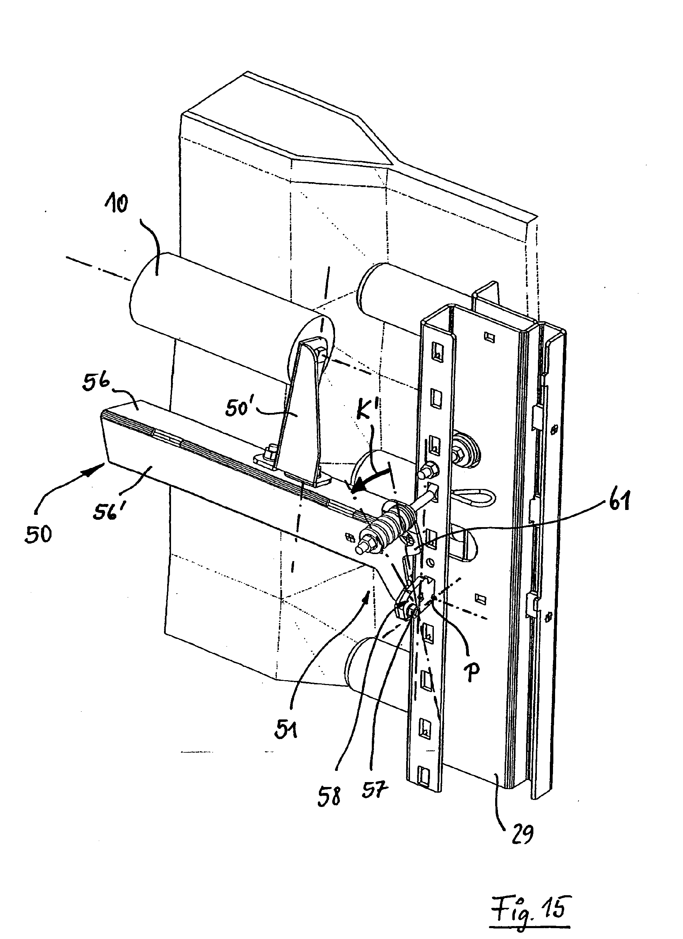

Aus den vergrößerten Ausschnittsdarstellungen gemäß Fig. 13 bis 15 wird deutlich, dass im Bereich der Stellorgane 51 jeweils eine mittels einer Stellschraube 53 einstellbare Spiralfeder 54 als Federelement vorgesehen ist. Mittels dieser Stellschraube 53 als einfach handhabbares Stellorgan kann durch entsprechende Drehverstellung die Federvorspannung (Pfeil 55, Fig. 13) eingestellt werden, so dass an der Andruckrolle 10 über die "Pendelstütze" 50 und den starren Tragarm 50' (Fig. 14) ein entsprechender Druck K wirksam ist. Aus der Zusammenschau von Fig. 14 (Anlagesituation ohne Schüttgutförderung) und Fig. 15 (Fördersituation ähnlich Fig. 2) wird deutlich, dass mittels der Spiralfeder 54 auch die gesamte Andruckeinheit A, A' auf eine an das jeweilige im Aufnahmeraum 5 befindliche Schüttgut-Volumen anpassbare Gegen-Druckkraft K' (Fig. 13) eingestellt wird, da der Querträger 50 in seiner Winkel- und/oder Abstandslage zum Fördertrum F als veränderbare Baugruppen ausgeführt werden kann. Mittels dieses Querträgers 50 mit Federvorspannung ist für das System die unter Wirkung des vergrößerten Volumens (Fig. 2) im Bereich des Fördertrums F erforderliche Ausgleichswirkung optimal einstellbar.

Im Bereich des Querträgers 50 ist einerseits die Andruckrolle 9, 10 und andererseits das Stellorgan 51 mit einem jeweiligen Schenkel 56 bzw. 56' des torsionssteifen Kastenprofils verbunden (Fig. 5). An den seitlichen Enden dieser Schenkel 56 bzw. 56' wird dabei zum jeweiligen am Kassettenchassis 26, 28 gehaltenen Stellorgan 51 hin ein Drehpunkt P definiert, so dass die gesamte Andruckeinheit A, A' auf einer bogenförmigen Bahn R (Fig. 13) schwenkbeweglich verlagert werden kann. Damit wird im Bereich der jeweiligen Stellorgane 51 ein sich permanent an die sich verändernde Außenkontur des Fördertrums F bzw. des Aufnahmeraums 5 anpassendes und optimal auf den jeweiligen Einsatz des Gurtförderers 1 einstellbares Gegenlager gebildet.

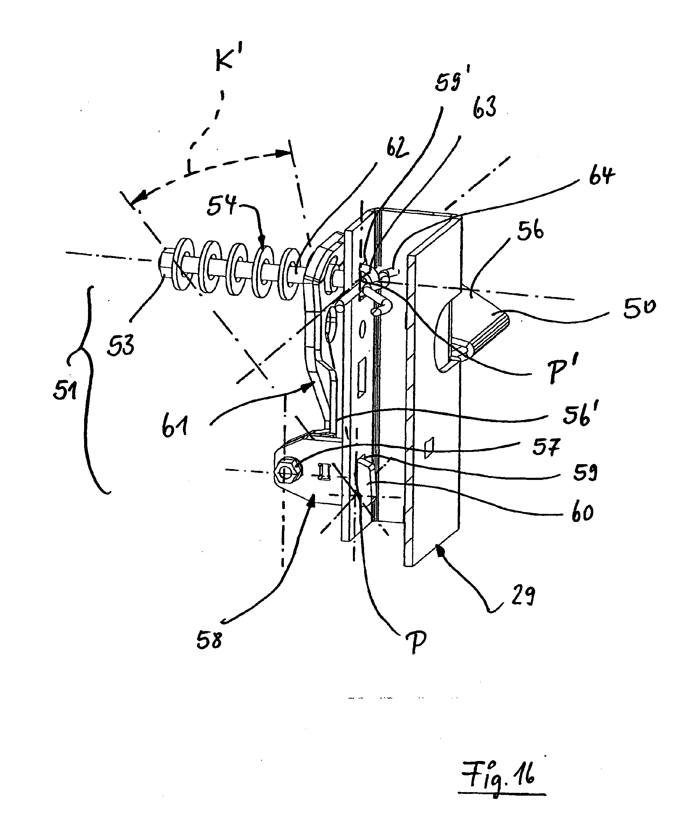

In Fig. 16 ist in einer vergrößerten Einzeldarstellung das Stellorgan 51 näher dargestellt, wobei eine mittels einer Schraubverbindung 57 das randseitige Ende des Schenkels 56' des Querträgers 50 erfassende Schwenkplatte 58 deutlich wird. Diese weist einen in einer Aufnahmeöffnung 59 des Vertikalträgers 29 eingreifende Haltenase 60 auf, mit der der Drehpunkt P definiert wird. Am oberhalb liegenden Schenkel 56 des Querträgers 50 ist ein Halteansatz 61 vorgesehen, an dem die Stellschraube 53 mit der Spiralfeder 54 mittels eines Haltestiftes 62 erfasst ist. Dieser Haltestift 62 ist mit einem endseitigen Ösenansatz 63 in eine Aufnahmeöffnung 59' der Vertikalstrebe 30 eingeführt und durch eine Halteklammer 64 wird eine ortsfeste Fixierung dieser Teile erreicht. Dieser Bereich bildet dabei einen Schwenkpunkt P', so dass das Stellorgan 51 bei Belastungswirkung K' die in Fig. 13 ersichtlichen Bewegungen gemäß Pfeil 55 und 55' ausführen kann und ein insgesamt variabel einstellbares Andrucksystem mit geringem Aufwand erreicht ist.

Ausgehend von dem vorbeschriebenen System des Tragwerkes T mit die Randbereiche 6, 6' bzw. 7, 7' erfassenden Schließelementen B, B' wird eine Verbesserung des verlustfreien Transports von Schüttgut 4, 4' dadurch erreicht, dass in das Tragwerk T zumindest im Bereich des Fördertrums F eine zusätzliche Sicherungs- und Dichtungsfunktion integriert wird. Dazu ist vorgesehen, dass die Randbereiche 6, 6' bzw. 7, 7' der Fördergurte 2, 3 einen in Richtung der Förderebene E seitlich über die Pressrollen 11, 12 bzw. 11', 12' verlängerten Überstandsbereich Z, Z' (Fig. 1, Fig. 2) aufweisen. Mit dieser vergleichsweise einfachen Maßnahme wird deutlich, dass das mit den beiden äußeren Schließeinheiten B, B' gebildete und die erfindungsgemäßen Sicherungs- und Dichtungsfunktionen realisierende Press-Ausgleichs-System mit einer bei randseitigem Schüttgutaustritt (Pfeil X, Fig. 9 und Fig. 11) wirksamen Aufnahmezone 65 (Fig. 8 bis 11, Fig. 19) kombiniert werden kann.

Die im Bereich der beiden Schließeinheiten B, B' am Seitenrand der Fördergurte 2, 3 angelegten Schließrollen 11, 12 bzw. 11', 12' können ihrerseits mit einer optimierbaren Breite U (Fig. 11) ausgebildet sein und bilden entsprechend der Einbaulage in ihrer Größe weitgehend variable freie Überstandszonen 7, 7', so dass das seitlich austretende Schüttgut 4' zu der jeweiligen Aufnahmezone 65, 65' hin positionsgenau ableitbar ist.

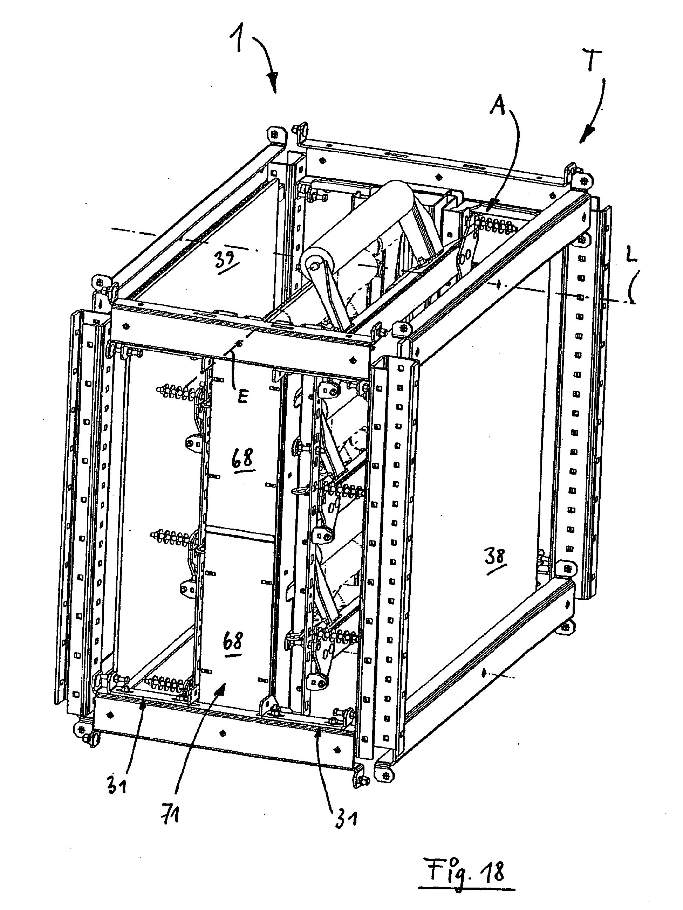

Für diese Bildung der Aufnahmezonen 65, 65' kann das Tragwerk T im Bereich des vertikalen Fördertrums F mit einem die freie äußere Überstandszone Z, Z' der Fördergurte 2, 3 zumindest U-förmig umgreifenden Aufnahmeprofilteil als zusätzliche Baugruppe versehen sein (nicht dargestellt). Mit diesen in vertikaler Richtung aneinanderreihbaren Aufnahmeprofilteile kann insgesamt ein vertikaler Leitschacht 71 (Fig. 18) definiert werden, der gemäß der in Fig. 18 ersichtlichen Ausführungen in das Tragwerk T integriert ist und zum unteren Ende des Gurtförderers 1 hin (Fig. 17) in einen jeweiligen Sammelkanal 66, 66' ausmündet, so dass das ausgetretene Schüttgut 4' zu einem Aufnahmebereich 67 des Gurtförderers 1 zurückführbar ist.

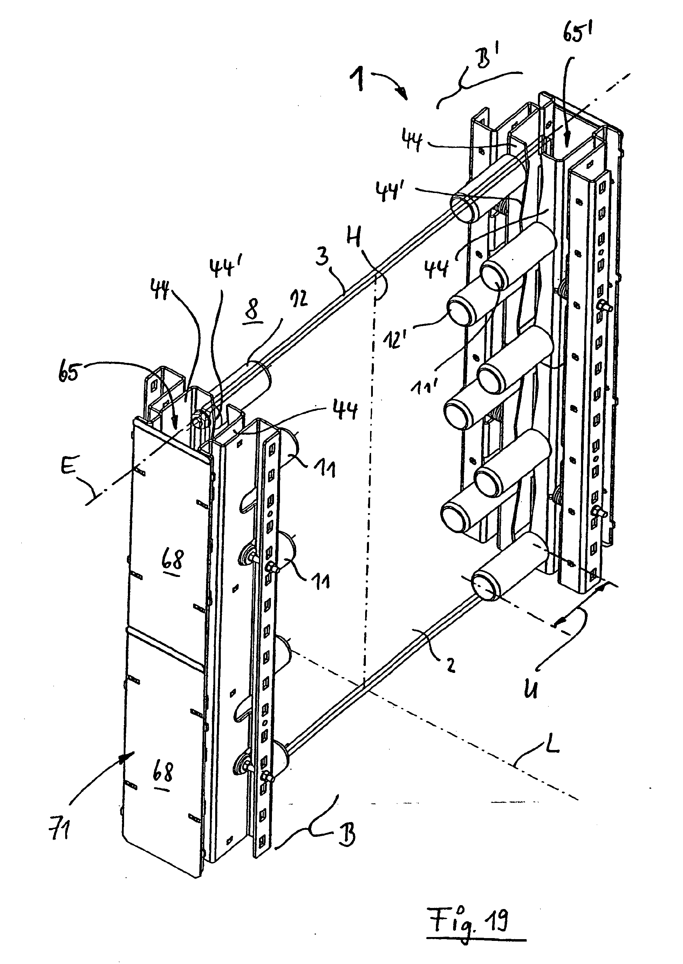

Die Zusammenschau der aus Fig. 17 bis 19 ersichtlichen Ausführung der jeweiligen Aufnahmezone 65, 65' mit den Darstellungen in Fig. 2 und 3 verdeutlicht, dass die Kassettenchassis 25 bis 28 aus im Querschnitt profilierten Stangen-Bauteilen aufgebaut sind. Damit wird bereits mit diesen Konturen zum Innenraum 8 des Tragwerkes T hin ein Verschluss der Aufnahmezone 65 erreicht. Diese Dichtigkeit ist dadurch verbessert, dass wellenförmige Randprofilierungen 44' (Fig. 9) an den als "Schließteile" wirksamen Tragplatten 44 vorgesehen sind. Zum Verschluss der Aufnahmezone 65 sind außenseitig an den Kassettenchassis 25, 26, 27, 28 lediglich noch die in Fig. 18 und 19 ersichtlichen Abdeckplatten 68 anzubringen, so dass der Leitschacht 71 insgesamt geschlossen ist. In den damit "dichten" Schacht 71 kann nahe dem unteren Ausleitbereich 69 (Fig. 17) eine entsprechende innere Leitplatte (nicht sichtbar) eingeschoben werden, so dass auf diese fallende Schüttgutteile erfasst und die seitliche Ausförderung des austretenden Schüttgutes in die dargestellten Sammelkanäle 66, 66' mit geringem Aufwand möglich ist.

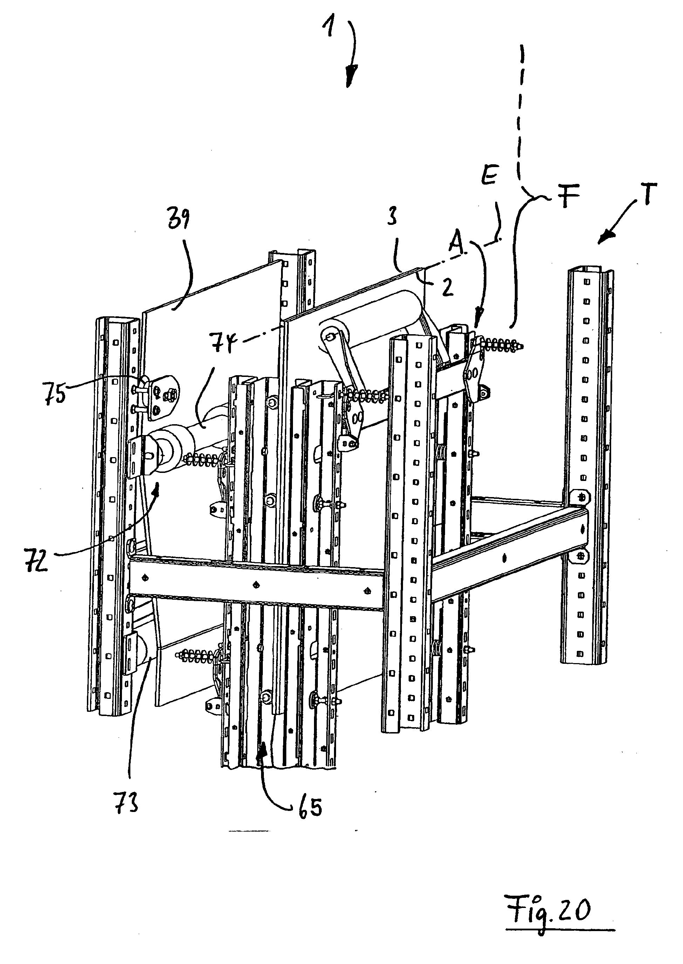

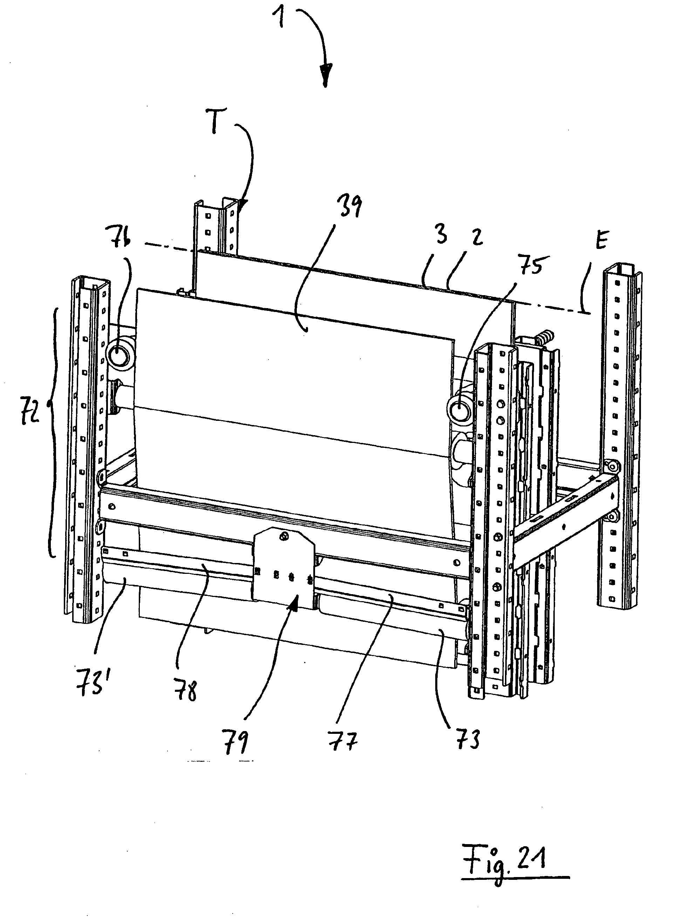

In Fig. 20 und 21 ist ein Teilbereich des Gurtförderers 1 mit einer als Vorspurstation ausgebildeten Baugruppe 72 dargestellt, die den bereits in Fig. 2 ersichtlichen Trum 39 als rücklaufenden Teil der Fördergurte 2 bzw. 3 erfasst. Dieser Trum 39 wird mittels jeweiliger Rollen 73, 73', 74 gespannt und seitliche Spurrollen 75, 76 bewirken eine Zentrierung. Zusätzlich ist eine Reinigungseinheit 79 mit jeweiligen Schabern 77, 78 vorgesehen.

## Patentansprüche

1. Gurtförderer in Form eines Steilbandförderers (1), mit zwei zumindest phasenweise in einem Fördertrum (F) parallel zueinander verlaufenden Fördergurten (2, 3), zwischen denen sich während einer Förderphase zur vertikalen Mitnahme von vorzugsweise losem Schüttgut (4) ein Aufnahmeraum (5) bildet, wobei in diesem zentralen Bereich des Fördertrums (F) an dessen jeweiligen Rückseiten Druckelemente (A, A') anlegbar sind und dabei die Fördergurte (2, 3) mit deren Randbereiche (6, 7; 6', 7') aneinanderpressenden Elementen (B, B') zusammenwirken, wobei das Fördertrum (F) zentral mittels gegenüberliegender Andruckrollen (9, 10) jeweiliger Andruckeinheiten (A, A') führbar sowie randseitig mittels Schließrollen (11, 12; 11', 12') jeweiliger Schließeinheiten (B, B') abdichtbar ist, **dadurch gekennzeichnet, dass** der Gurtförderer (1) aus jeweiligen baukastenartig in einer Stapelstellung verbindbaren Tragwerken (T) mit quaderförmigem Innenraum (8) aufgebaut ist, in diesem das Fördertrum (F) mittels dreier Rollen-Paarungen (9, 10; 11, 12; 11', 12') ein im Bereich von Stützverbindungen am Tragwerk (T) einstellbares Press-Ausgleichs-System aufweist und damit die in einem jeweiligen Bereich am Fördertrum (F) zusammenwirkenden Einheiten (A, A', B, B') ein Fördersystem mit voneinander entkoppelten Bruchsicherungen definieren, wobei das Tragwerk (T) als ein geschlossener Gehäuserahmen mit vier Eckpfosten (13, 14, 15, 16) ausgebildet ist, diesen jeweils paarweise übereinander Längsbalken (17, 18, 19, 20) sowie parallel zum innen liegenden Fördertrum (F) verlaufende Querbalken (21, 22, 23, 24) zugeordnet sind und an zumindest einem dieser Balkenteile die drei Andruck- und Schließeinheiten (A, A', B, B') einstellbar gehalten sind.

2. Gurtförderer nach Anspruch 1, **dadurch gekennzeichnet, dass** die Andrucksowie die Schließeinheiten (A, A', B, B') im Bereich der beiden gegenüberliegenden Paare von Längsbalken (17, 18, 19, 20) an jeweils zwei Kassettenchassis (25, 26; 27, 28) in Form von paarweise zusammenwirkenden Vertikalträgern (29, 30; 29', 30') die Stützverbindungen definieren.

3. Gurtförderer nach Anspruche 1 oder 2, **dadurch gekennzeichnet, dass** das Tragwerk (T) im Innenraum (8) beidseits mit Abstand (D, D') zur zentralen Andruckeinheit (A, A') des Fördertrums (F) jeweils ein vor- bzw. rücklaufendes Leertrum (38, 39) der Fördergurte (2, 3) aufnimmt und diese jeweils im Nahbereich der paarweise übereinander angeordneten Querbalken (21, 22; 23, 24) verlaufen.

4. Gurtförderer nach einem der Ansprüche 1 bis 3, **dadurch gekennzeichnet, dass** im Bereich eines jeden Tragwerkes (T) in einer funktionalen Übereinanderanordnung mehrere der Andruck- und Schließeinheiten (A, A'; B, B') mit vorgebbarem Abstand (G, G') vorgesehen sind und diese als vollständig in das Tragwerk (T) integrierte Press-Ausgleichs-Systeme zusammenwirken.

5. Gurtförderer nach einem der Ansprüche 1 bis 4, **dadurch gekennzeichnet, dass** im Bereich der Andruckeinheiten (A, A') und der Schließeinheiten (B, B') jeweilige elastische Eigenschaften des Gurtmaterials unmittelbar als Bruchsicherung nutzbar sind, derart, dass bei Volumenänderungen im Aufnahmeraum (5) und/oder Materialverlagerungen (4') in die Randbereiche (6, 7, 6', 7') nur durch eine Dehnung der Fördergurte (2, 3) ein bruchsicherer Belastungsausgleich erreichbar ist.

6. Gurtförderer nach einem der Ansprüche 1 bis 4, **dadurch gekennzeichnet, dass** die Andruckeinheiten (A, A') und die Schließeinheiten (B, B') jeweilige sowohl Volumenschwankungen im Bereich der Andruckrollen (9, 10) als auch Verlagerungen von Schüttgut-Teilen (4') zwischen den Schließrollen (6, 7, 6', 7') aufnehmende Ausgleichsbaugruppen definieren, derart, dass mittels jeweiliger federnd gelagerter Teile im Bereich der Stützverbindungen der voneinander entkoppelten Systeme (A, A', B, B') eine jeweilige Bruchsicherungs-Funktion wirksam ist.

7. Gurtförderer nach einem der Ansprüche 1 bis 6, **dadurch gekennzeichnet, dass** die zentralen Andruckeinheiten (A, A') jeweils einen sich im wesentlichen horizontal zwischen den Vertikalträgern der Kassettenchassis (25, 26, 27, 28) erstreckenden Querträger (50) aufweisen und mit diesem die jeweilige Andruckrolle (9, 10) der Andruckeinheit (A, A') nach Art einer Pendelstütze zusammenwirkt, derart, dass jeweilige mittels eines Stellgliedes (52) im Bereich eines Stellorgans (51) variabel vorgebbare Duckparameter auf die Andruckrolle (9, 10) übertragbar sind.

8. Gurtförderer nach Anspruch 7, **dadurch gekennzeichnet, dass** sämtliche im Fördertrum (F) angeordnete Andruckeinheiten (A, A') im Bereich gegenüberliegender Vertikalträger (29, 29', 30, 30') der Kassettenchassis (25, 27, 26, 28) zumindest ein auf die Pendelstütze bzw. die Andruckrolle (9, 10) einwirkendes Stellorgan (51) aufweisen.

9. Gurtförderer nach Anspruch 7 oder 8, **dadurch gekennzeichnet, dass** im Bereich der Stellorgane (51) jeweils eine einstellbare Spiralfeder (46') als Federelement (46) vorgesehen ist, derart, dass durch Änderung der Federvorspannung (Pfeil 55) der Anlagedruck (K) der Andruckrollen (9, 10) einstellbar ist.

10. Gurtförderer nach Anspruch 9, **dadurch gekennzeichnet, dass** mittels der Federelemente (46) die Andruckeinheit (A, A') auf eine an das jeweilige im Aufnahmeraum (5) befindliche Schüttgut (4, 4') anpassbare Druckkraft einstellbar und dabei der Querträger (50) in seiner Winkel- und/oder Abstandslage veränderbar ist.

11. Gurtförderer nach einem der Ansprüche 7 bis 10, **dadurch gekennzeichnet, dass** einerseits das als Andruckrolle (9, 10) ausgebildete Andruckelement und andererseits das Stellorgan (51) fest mit dem Querträger (50) verbunden sind, dieser am Kassettenchassis (25, 26, 27, 28) einen Drehpunkt (P) definiert und die Andruckeinheit (A, A') auf einer bogenförmigen Bahn (R) schwenkbeweglich verlagerbar ist.

12. Gurtförderer nach einem der Ansprüche 7 bis 11, **dadurch gekennzeichnet, dass** mit dem Stellorgan (51) ein sich permanent an die sich verändernde Außenkontur des Fördertrums (F) bzw. des Aufnahmeraumes (5) anpassendes Gegenlager gebildet ist.

13. Gurtförderer nach einem der Ansprüche 1 bis 5, **dadurch gekennzeichnet, dass** die paarweise zusammenwirkenden Schließelemente (B, B') an den Vertikalträgern (29, 29', 30, 30') der Kassettenchassis (25, 26, 27, 28) durch ein jeweiliges als Halteplatte (40) wirksames Aufnahmeblech gehalten sind und diese in vertikal beabstandeter Einbaulage einen jeweiligen Dehnungsweg (D) für die Fördergurte (2, 3) vorgeben.

14. Gurtförderer nach einem der Ansprüche 4 bis 4 und 6, **dadurch gekennzeichnet, dass** die als Schließelemente (B, B') paarweise zusammenwirkenden Pressrollen (11, 12, 11', 12') mittels eines gegen eine Rückstellfeder (46) verlagerbaren Schwenkhalteteils in Form einer L-förmigen Tragplatte (44) die bruchsichere Ausgleichsbaugruppe am Kassettenchassis (25, 26, 27, 28) bilden.

15. Gurtförderer nach Anspruch 14, **dadurch gekennzeichnet, dass** die Tragplatte (44) einerseits am langen Schenkel (47) am Vertikalträger gehalten ist und andererseits am kurzen Schenkel (47') die Pressrolle (11, 12, 11', 12') trägt.

16. Gurtförderer mit jeweilige Randbereiche zweier Fördergurte erfassenden Schließelementen (B, B'), insbesondere nach einem der Ansprüche 1 bis 6, **dadurch gekennzeichnet, dass** das mit den beiden äußeren Schließeinheiten (B, B') gebildete und eine Sicherungs- und Dichtungsfunktion realisierende Press-System mit einer bei randseitigem Schüttgutaustritt im Bereich des Fördertrums (F) wirksamen Aufnahmezone (65) verbunden ist.

17. Gurtförderer nach Anspruch 16, **dadurch gekennzeichnet, dass** die im Bereich der Schließeinheiten (B, B') vorgesehenen Schließrollen (11, 12, 11', 12') jeweils mit Abstand zum Randbereich der Fördergurte (2, 3) an diesen anlegbar sind, derart, dass an den Fördergurten (2, 3) eine freie äußere Überstandszone (Z, Z') gebildet und in dieser seitlich austretendes Schüttgut (4') zu einer definierten Aufnahmezone (65') hin ableitbar ist.

18. Gurtförderer nach Anspruch 16 oder 17, **dadurch gekennzeichnet, dass** die Tragwerke (T) im Bereich des vertikalen Fördertrums (F) mit einem die freie äußere Überstandszone (Z, Z') der Fördergurte (2, 3) zumindest U-förmig umgreifenden Aufnahmeprofilteil versehen sind.

19. Gurtförderer nach einem der Ansprüche 16 bis 18, **dadurch gekennzeichnet, dass** die in vertikaler Richtung aneinandergereihten Aufnahmeprofilteile einen Leitschacht (71) für austretendes Schüttgut (4') bilden.

20. Gurtförderer nach einem der Ansprüche 16 bis 19, **dadurch gekennzeichnet, dass** zumindest ein austretendes Schüttgut (4') zum Aufnahmebereich (67) des Gurtförderers (1) zurückführender Sammelkanal (66, 66') vorgesehen ist.

## Claims

1. Belt conveyor in the form of an inclined belt conveyor (1), having two conveyor belts (2, 3) that run parallel to one another, at least in certain phases, on a conveying side (F), between which belts an accommodation space (5) forms during a conveying phase, for vertical transport of preferably loose bulk material (4), wherein pressure elements (A, A') can be laid against the rear sides, in each instance, of the conveying side (F), in this central region, and, in this connection, the conveyor belts (2, 3) interact with elements (B, B') that press their edge regions (6, 7; 6', 7') against one another, wherein the conveying side (F) can be guided centrally by means of press-down rollers (9, 10) of press-down units (A, A'), in each instance, which lie opposite one another, and can be sealed, at the edge, by means of closure rollers (11, 12; 11', 12') of closure units (B, B'), in each instance, **characterized in that** the belt conveyor (1) is composed of supporting structures (T) having a block-shaped interior (8), which structures can be connected in a stacked position, in modular manner, in each instance, that in this interior, the conveying side (F) has a pressure equalization system that is adjustable in the region of support connections on the supporting structure (T), by means of three roller pairings (9, 10; 11, 12; 11', 12'), and thereby the units (A, A', B, B') that interact in a region on the conveying side (F), in each instance, define a conveying system having rupture safety devices that are uncoupled from one another, wherein the supporting structure (T) is configured as a closed housing frame with four corner posts (13, 14, 15, 16) and longitudinal beams (17, 18, 19, 20) that run in pairs, one on top of the other, and that transverse beams (21, 22, 23, 24) that run parallel to the conveying side (F) that lies on the inside are assigned to these posts, in each instance, and that the three press-down and closure units (A, A', B, B') are held on at least one of these beam parts, in adjustable manner.

2. Belt conveyor according to claim 1, **characterized in that** the press-down and closure units (A, A', B, B') define the support connections in the region of the two opposite pairs of longitudinal beams (17, 18, 19, 20) on two cassette chassis (25, 26' 27, 28) in the form of vertical beams (29, 20 29', 30') that interact in pairs, in each instance.

3. Belt conveyor according to claim 1 or 2, **characterized in that** the supporting structure (T) accommodates an empty side (38, 29) of the conveyor belts (2, 3), which sides runs forward or back, in each instance, in the interior (8), on both sides, at a distance (D, D') from the central press-down unit (A, A') of the conveying side (F), and that these run in the immediate vicinity, in each instance, of the transverse beams (21, 22' 23, 24) that are disposed in pairs, one above the other.

4. Belt conveyor according to one of claims 1 to 3, **characterized in that** multiple press-down and closure units (A, A'; B, B') are provided in the region of each supporting structure (T), in a functional arrangement one on top of the other, at a distance (G, G') that can be predetermined, and that these interact as pressure equalization systems that are completely integrated into the supporting structure (T).

5. Belt conveyor according to one of claims 1 to 4, **characterized in that** elastic properties of the belt material, in each instance, can be directly utilized in the region of the press-down units (A, A') and of the closure units (B, B'), as rupture safety devices, in such a manner that in the event of volume changes in the accommodation space (5) and/or material displacements into the edge regions (6, 7, 6', 7'), rupture-proof stress equalization can be achieved merely by means of elongation of the conveyor belts (2, 3).

6. Belt conveyor according to one of claims 1 to 4, **characterized in that** the press-down units (A, A') and the closure units (B, B') define equalization modules that absorb not only volume variations in the region of the press-down rollers (9, 10) but also displacements of bulk material parts (4') between the closure rollers (6, 7, 6', 7'), in each instance, in such a manner that a rupture safety function is in effect, in each instance, in the region of the support connections of the systems (A, A', B, B') that are uncoupled from one another, by means of parts that are resiliently mounted, in each instance.

7. Belt conveyor according to one of claims 1 to 6, **characterized in that** the central press-down units (A, A') have a transverse beam (50) that extends essentially horizontally between the vertical beams of the cassette chassis (25, 26, 27, 28), in each instance, and that the press-down roller (9, 10) of the press-down unit (A, A'), in each instance, interacts with this beam, in the manner of a pendulum support, in such a manner that pressure parameters that can be variably predetermined in the region of a setting organ (51), by means of an adjustment element (52), in each instance, can be transferred to the press-down roller (9, 10).

8. Belt conveyor according to claim 7, **characterized in that** all the press-down units (A, A') disposed on the conveying side (F) have at least one setting organ (51) that acts on the pendulum support or the press-down roller (9, 10), in the region of vertical beams (29, 29', 30, 30') of the cassette chassis (25, 26, 27, 28) that lie opposite one another.

9. Belt conveyor according to claim 7 or 8, **characterized in that** an adjustable helical spring (46'), in each instance, is provided in the region of the setting organs (51), as a spring element (46), in such a manner that the contact pressure (K) of the press-down rollers (9, 10) can be adjusted by means of a change in the spring bias (arrow 55).

10. Belt conveyor according to claim 9, **characterized in that** the press-down unit (A, A') can be adjusted to a pressure force that is adaptable to the bulk material (4, 4') situated in the accommodation space (5), in each instance, and, in this connection, the transverse beam (50) is changeable in terms of its angle and/or distance position.

11. Belt conveyor according to one of claims 7 to 10, **characterized in that** the press-down element configured as a press-down roller (9, 10), on the one hand, and the setting organ (51), on the other hand, are firmly connected with the transverse beam (50), that the latter defines a point of rotation (P) on the cassette chassis (25, 26, 27, 28), and that the press-down unit (A, A') is displaceable on an arc-shaped path (R), with a pivoting movement.

12. Belt conveyor according to one of claims 7 to 11, **characterized in that** a counter-bearing that permanently adapts to the changing outer contour of the conveying side (F) or of the accommodation space (5) is formed with the setting organ (51).

13. Belt conveyor according to one of claims 1 to 5, **characterized in that** the closure elements (B, B'), which interact in pairs, are held on the vertical beams (29, 29', 30, 30') of the cassette chassis (25, 26, 27, 28) by means of a metal accommodation sheet that acts as a holding plate (40), and that these predetermine an elongation path (D) for the conveyor belts (2, 3), in each instance, in an installation position in which they are vertically spaced apart.

14. Belt conveyor according to one of claims 4 to 4 [sic] and 6, **characterized in that** the press-down rollers (11, 12, 11', 12') that interact in pairs, as closure elements (B, B'), form the rupture-proof equalization module on the cassette chassis (25, 26, 27, 28), by means of a pivot holder part in the form of an L-shaped support plate (44), which can be displaced counter to a re-set spring (46).

15. Belt conveyor according to claim 14, **characterized in that** the support plate (14) is held on the vertical beam on the long shank (47), on the one hand, and carries the pressing roller (12, 12, 11', 12') on the short shank, on the other hand.

16. Belt conveyor having closure elements (B, B') that grasp edge regions of two conveyor belts, in each instance, particularly according to one of claims 1 to 6, **characterized in that** the pressing system formed by the two outer closure units (B, B') and implementing a safety and sealing function is connected with an accommodation zone (65) that is in effect when bulk material exits at the edge, in the region of the conveying side (F).

17. Belt conveyor according to claim 16, **characterized in that** the closure rollers (11, 12, 11', 12') provided in the region of the closure units (B, B') can be laid against the conveyor belts (2, 3), at a distance from their edge region, in each instance, in such a manner that a free outer projection zone (Z, Z') is formed on the conveyor belts (2, 3), and that bulk material (4') that exits laterally in this zone can be passed to a defined accommodation zone (65').

18. Belt conveyor according to claim 16 or 17, **characterized in that** the supporting structures (T) are provided, in the region of the vertical conveying side (F), with an accommodation profile part that engages around the free outer projection zone (Z, Z') of the conveyor belts (2, 3), at least in U shape.

19. Belt conveyor according to one of claims 16 to 18, **characterized in that** the accommodation profile parts that are lined up with one another in the vertical direction form a guide shaft (71) for exiting bulk material (4').

20. Belt conveyor according to one of claims 16 to 19, **characterized in that** at least one collection channel (66, 66') that passes exiting bulk material (4') back to the accommodation region (67) of the belt conveyor (1) is provided.

## Revendications

1. Transporteur à courroie sous forme de transporteur à courroie inclinée (1), avec deux courroies de transport (2, 3) s'étendant au moins par phase parallèlement l'une à l'autre dans un brin de transport (F), entre lesquelles se forme un espace de réception (5) pendant une phase de transport pour l'entraînement vertical de produit (4) de préférence en vrac, des éléments de pressage (A, A') pouvant être posés dans cette zone centrale du brin de transport (F) sur ses côtés arrière respectifs et les courroies de transport (2, 3) coagissant avec des éléments (B, B') pressant les unes contre les autres leurs zones de bord (6, 7 ; 6', 7'), le brin de transport (F) pouvant être guidé de manière centrale à l'aide de rouleaux de pressage (9, 10) opposés d'unités de pressage (A, A') respectives ainsi que pouvant être rendu étanche côté bord à l'aide de rouleaux de fermeture (11, 12 ; 11', 12') d'unités de fermeture (B, B') respectives, **caractérisé en ce que** le transporteur à courroie (1) est constitué de structures porteuses (T) respectives pouvant être reliées comme un module dans une position d'empilement avec un espace intérieur (8) parallélépipédique, dans lequel le brin de transport (F) présente à l'aide de trois paires de rouleaux (9, 10 ; 11, 12 ; 11', 12') un système de compensation et de pressage réglable dans la zone de liaisons d'appui sur la structure porteuse (T) et ainsi les unités (A, A', B, B') coagissant dans une zone respective sur le brin de transport (F) définissent un système de transport avec des protections à la rupture découplées les unes des autres, la structure porteuse (T) étant réalisée comme un cadre de boîtier fermé avec quatre montants d'angle (13, 14, 15, 16), auxquels sont associées des barres longitudinales (17, 18, 19, 20) s'étendant les unes au-dessus des autres respectivement par paires ainsi que des barres transversales (21, 22, 23, 24) s'étendant parallèlement au brin de transport (F) intérieur et les trois unités de pressage et de fermeture (A, A', B, B') étant maintenues de manière réglable sur au moins l'une de ces parties de barre.

2. Transporteur à courroie selon la revendication 1, **caractérisé en ce que** les unités de pressage ainsi que les unités de fermeture (A, A', B, B') définissent les liaisons d'appui dans la zone des deux paires opposées de barres longitudinales (17, 18, 19, 20) sur respectivement deux châssis à cassette (25, 26 ; 27, 28) sous la forme de supports verticaux (29, 30 ; 29', 30') coagissant par paire.

3. Transporteur à courroie selon la revendication 1 ou 2, **caractérisé en ce que** la structure porteuse (T) dans l'espace intérieur (8) de part et d'autre et à distance (D, D') de l'unité de pressage (A, A') centrale du brin de transport (F) reçoit respectivement un brin vide (38, 39) avançant ou reculant des courroies de transport (2, 3) et ceux-ci s'étendent respectivement dans la zone proche des barres transversales (21, 22 ; 23, 24) disposées par paire les unes au-dessus des autres.

4. Transporteur à courroie selon l'une quelconque des revendications 1 à 3, **caractérisé en ce que** dans la zone de chaque structure porteuse (T), plusieurs des unités de pressage et de fermeture (A, A' ; B, B') sont prévues à distance prescriptible (G, G') dans un agencement superposé fonctionnel et celles-ci coagissent comme des systèmes de compensation et de pressage intégrés complètement dans la structure porteuse (T).

5. Transporteur à courroie selon l'une quelconque des revendications 1 à 4, **caractérisé en ce que** dans la zone des unités de pressage (A, A') et des unités de fermeture (B, B'), des propriétés élastiques respectives du matériau de courroie peuvent être utilisées directement comme protection à la rupture de telle manière qu'une compensation de charge résistante à la rupture puisse être atteinte lors des modifications de volume dans l'espace de réception (5) et/ou déplacements de matériau (4') dans les zones de bord (6, 7, 6', 7') seulement par une extension des courroies de transport (2, 3).

6. Transporteur à courroie selon l'une quelconque des revendications 1 à 4, **caractérisé en ce que** les unités de pressage (A, A') et les unités de fermeture (B, B') définissent des blocs de compensation respectifs recevant des oscillations de volume dans la zone des rouleaux de pressage (9, 10) mais aussi des déplacements de parties de produit en vrac (4') entre les rouleaux de fermeture (6, 7, 6', 7') de telle manière qu'une fonction de protection à la rupture respective soit active à l'aide de parties logées sur ressort respectives dans la zone des liaisons d'appui des systèmes (A, A', B, B') découplés les uns des autres.

7. Transporteur à courroie selon l'une quelconque des revendications 1 à 6, **caractérisé en ce que** les unités de pressage (A, A') centrales présentent chacune une traverse (50) s'étendant sensiblement horizontalement entre les supports verticaux des châssis à cassette (25, 26, 27, 28) et le rouleau de pressage respectif (9, 10) de l'unité de pressage (A, A') coagit avec celle-ci comme un support oscillant de telle manière que des paramètres de pressage respectifs prescriptibles de manière variable à l'aide d'un élément de réglage (52) dans la zone d'un organe de réglage (51) puissent être transmis au rouleau de pressage (9, 10).

8. Transporteur à courroie selon la revendication 7, **caractérisé en ce que** toutes les unités de pressage (A, A') disposées dans le brin de transport (F) dans la zone des supports verticaux (29, 29', 30, 30') opposés des châssis à cassette (25, 27, 26, 28) présentent au moins un organe de réglage (51) agissant sur le support oscillant ou le rouleau de pressage (9, 10).

9. Transporteur à courroie selon la revendication 7 ou 8, **caractérisé en ce que** dans la zone des organes de réglage (51), respectivement un ressort en spirale (46') réglable est prévu comme élément de ressort (46) de telle manière que la pression d'appui (K) des rouleaux de pressage (9, 10) puisse être réglée par modification de la précontrainte de ressort (flèche 55).

10. Transporteur à courroie selon la revendication 9, **caractérisé en ce que** l'unité de pressage (A, A') peut être réglée à l'aide des éléments de ressort (46) sur une force de pression adaptable au produit en vrac (4, 4') respectif se trouvant dans l'espace de réception (5) et la traverse (50) peut être modifiée dans sa position angulaire et/ou d'écartement.

11. Transporteur à courroie selon l'une quelconque des revendications 7 à 10, **caractérisé en ce que** d'une part l'élément de pressage réalisé comme un rouleau de pressage (9, 10) et d'autre part l'organe de réglage (51) sont reliés fixement à la traverse (50), cette dernière définit un point de rotation (P) sur le châssis à cassette (25, 26, 27, 28) et l'unité de pressage (A, A') peut être déplacée de manière mobile en pivotement sur une bande (R) arquée.

12. Transporteur à courroie selon l'une quelconque des revendications 7 à 11, **caractérisé en ce qu'**un contre-palier s'adaptant en permanence au contour extérieur se modifiant du brin de transport (F) ou de l'espace de réception (5) est formé avec l'organe de réglage (51).

13. Transporteur à courroie selon l'une quelconque des revendications 1 à 5, **caractérisé en ce que** les éléments de fermeture (B, B') coagissant par paire sont maintenus sur les supports verticaux (29, 29', 30, 30') des châssis à cassette (25, 26, 27, 28) par une tôle de réception respective agissant comme une plaque de retenue (40) et ceux-ci prescrivent dans la position d'installation espacée verticalement une course d'extension (D) respective pour les courroies de transport (2, 3).

14. Transporteur à courroie selon l'une quelconque des revendications 1 à 4 et 6, **caractérisé en ce que** les rouleaux de pressage (11, 12, 11', 12') coagissant par paire comme éléments de fermeture (B, B') forment le bloc de compensation résistant à la rupture sur le châssis à cassette (25, 26, 27, 28) à l'aide d'une partie de retenue pivotante déplaçable contre un ressort de rappel (46).

15. Transporteur à courroie selon la revendication 14, **caractérisé en ce que** la plaque porteuse (44) est maintenue d'une part sur la branche longue (47) sur le support vertical et porte d'autre part sur la branche courte (47') le rouleau de pressage (11, 12, 11', 12').

16. Transporteur à courroie avec des éléments de fermeture (B, B') saisissant des zones de bord respectives de deux courroies de transport, en particulier selon l'une quelconque des revendications 1 à 6, **caractérisé en ce que** le système de pressage formé avec les deux unités de fermeture extérieures (B, B') et réalisant une fonction de protection et d'étanchéité est relié à une zone de réception (65) active lors de la sortie du produit en vrac côté bord dans la zone du brin de transport (F).

17. Transporteur à courroie selon la revendication 16, **caractérisé en ce que** les rouleaux de fermeture (11, 12, 11', 12') prévus dans la zone des unités de fermeture (B, B') peuvent être posés respectivement à distance de la zone de bord des courroies de transport (2, 3) sur celles-ci de telle manière qu'une zone en porte-à-faux (Z, Z') extérieure libre soit formée sur les courroies de transport (2, 3) et du produit en vrac (4') sortant latéralement dans celle-ci puisse être évacué vers une zone de réception (65') définie.

18. Transporteur à courroie selon la revendication 16 ou 17, **caractérisé en ce que** les structures porteuses (T) sont pourvues dans la zone du brin de transport (F) vertical d'une partie de profilé de réception entourant au moins en U la zone en porte-à-faux (Z, Z') extérieure libre des courroies de transport (2, 3).

19. Transporteur à courroie selon l'une quelconque des revendications 16 à 18, **caractérisé en ce que** les parties de profilé de réception juxtaposées dans le sens vertical forment un puits de guidage (71) pour du produit en vrac sortant (4').

20. Transporteur à courroie selon l'une quelconque des revendications 16 à 19, **caractérisé en ce qu'**au moins un canal collecteur (66, 66') ramenant du produit en vrac (4') sortant vers la zone de réception (67) du transporteur à courroie (1) est prévu.
